# EUROPEAN PATENT SPECIFICATION

(11) **EP 2 978 803 B1**
(45) Date of publication and mention of the grant of the patent: **03.05.2017**
(21) Application number: 14711775.8
(22) Date of filing: 24.03.2014
(51) Int. Cl.: C08K 5/00, C08K 3/06, C08K 5/14, C08K 5/39, C08K 5/40, C08K 5/47, C08L 23/16

(54) **PROCESS FOR CROSSLINKING EPM AND EPDM**
VERFAHREN ZUR VERNETZUNG VON EPM UND EPDM
PROCÉDÉ DE RÉTICULATION D'EPM ET EPDM

(30) Priority: 26.03.2013 EP 13161082
(43) Date of publication of application: 03.02.2016
(73) Proprietor: Akzo Nobel Chemicals International B.V., 6824 BM Arnhem (NL)
(72) Inventor: BEEK, Waldo Joseph Elisabeth, NL-7424 BH Deventer (NL)
(74) Representative: Akzo Nobel IP Department
(86) International application number: PCT/EP2014/055784
(87) International publication number: WO 2014/154602

(56) References cited:
- EP-A1- 0 171 154
- WO-A1-99/11700
- DE-A1-102005 058 933

## Description

The present invention relates to a process for crosslinking ethylene-propylene (EPM) and ethylene-propylene-diene terpolymer (EPDM) elastomers.

EPM-type elastomers are generally crosslinked (cured) with peroxides; EPDM-type elastomers can be crosslinked with either sulfur or peroxides. Peroxide crosslinking generally provides better thermal properties because of the higher thermal stability of the formed C-C bonds versus S-S bonds, but has one big disadvantage: oxygen inhibition. If air is not excluded during the crosslinking process, oxygen inhibition occurs, leaving a tacky surface.
Measures to exclude air add to the costs and complexity of the crosslinking. Furthermore, the need for air exclusion may prevent compounders from switching from sulfur cure to peroxide cure using existing equipment.

EPM and EPDM are (chain) saturated polymers. Their radical cure mechanism is different from that of chain unsaturated polymers, like SBR and NR. Radical crosslinking in unsaturated polymers is known to propagate due to radical addition reactions; such addition reactions are much less apparent in chain saturated polymers like EPM and EPDM. The effect is that the radical (peroxide) cure efficiency in EPM and EPDM is generally much less than in other elastomers. Furthermore, due to the stiff nature of the formed C-C bonds in peroxide cured elastomers, their tear strength (resistance to tearing) is very poor.

A shortcoming of the sulfur cure of chain saturated elastomers is the low temperature resistance of the resulting cured elastomers. At high temperatures, the labile S-S bonds break and this leads to higher compression set at high temperatures (typically > 100°C),

A way to improve the crosslinking of chain saturated elastomers is the use of both sulfur and peroxide as crosslinking aids. This is called hybrid cure and leads to better tear strength compared to peroxide cure and better temperature resistance compared to sulfur cure. An example of such a system is provided by WO 01/34680, which adds a silicone elastomer or a polycitracon- or polymaleimide as a coagent to a crosslinking system which contains sulfur, a sulfur cure accelerator, and a peroxide.

It has now been found that the addition of a co-agent is not required if a specific combination of sulfur cure accelerators is used.

The present invention therefore relates to a process for crosslinking an elastomer selected from EPM and EPDM comprising the step of combining said elastomer with the following ingredients:
- elemental sulfur
- a peroxide
- a first sulfur cure accelerator being a benzothiazole sulfenamide
- a second sulfur cure accelerator selected from the group consisting of dithiocarbamates and thiurams.

Any EPM or EPDM-type elastomer can be crosslinked with the process of the present invention. Preferably, the elastomer is EPDM. More preferably, it is EPDM with an ethylene content in the range 20-90 wt%, more preferably 30-80 wt%, and most preferably 45-75 wt%.
The diene used to form the EPDM can be any conventionally used diene such as dicyclopentadiene or ethylideennorbornene. The diene content is preferably in the range 1-12 wt%, more preferably 2-10 wt%, and most preferably 2-9 wt%.

The process is preferably conducted in the absence of unsaturated elastomers, i.e. elastomers with an iodine number of 50 or more. This iodine number can be determined in accordance with the method disclosed by S.G. Gallo, et al., Industrial and Engineering Chemistry, Vol. 40, 1948, pp. 12-80.
Examples of such unsaturated rubbers are natural rubbers, polybutadiene rubbers, nitrile rubbers, polyisoprene, polychloropropene, and poly(styrene-butadiene) rubbers.
As explained above, the curing mechanism of these elastomers differs greatly from that of the saturated elastomers EPM and EPDM.

Any peroxide conventionally used for curing EPM or EPDM can be used in the process of the present invention. Preferred peroxides include dicumyl peroxide, trimeric cyclic methyl ethyl ketone peroxide, 2,5-dimethyl-2,5-di(tert-butylperoxy)hexane and di(t-butylperoxyisopropyl)benzene.
The peroxide is preferably used in the process of the present invention in an amount of 0.1-10 phr (weight parts per hundred weight parts of resin), more preferably 0.5-6 phr, and most preferably 1-3 phr, calculated as pure peroxide.

The term "elemental sulfur" refers to a compound with the formula Sₙ wherein n is at least 1 and thus includes sulfur in its atomic, oligomeric, cyclic and/or polymeric state.
Sulfur is preferably used in the process of the present invention in an amount of 0.05-2 phr, more preferably 0.1-1.5 phr, and most preferably 0.2-1 phr.

The first sulfur cure accelerator is a benzothiazole sulfenamide. Examples of suitable benzothiazole sulfenamides are N-t-butyl-2-benzothiazole sulfenamide and N-cyclohexyl-2-benzothiazole sulfenamide, 2-morpholinothiobenzothiazole, and N-dicyclohexylbenzothiazole-2-sulfenamide. N-cyclohexyl-2-benzothiazole sulfenamide is the most preferred first sulfur cure accelerator, because it does not liberate unsafe nitrosamines upon use.
The benzothiazole sulfenamide is preferably used in the process of the present invention in an amount of 0.5-5 phr, more preferably 0.2-4 phr, and most preferably 0.5-3 phr.

The second sulfur cure accelerator is selected from the group consisting of dithiocarbamates and thiurams. Preferably, the second sulfur cure accelerator is selected from the group consisting of dithiocarbamates and thiuram polysulfides. Thiuram polysulfides are defined as thiurams other than thiuram monosulfides Thiuram polysulfides thus include thiuram disulfides, thiuram trisulfides, thiuram tertrasulfides, and thiuram hexasulfides. More preferably, the second sulfur cure accelerator is selected from the group consisting of dithiocarbamates and thiuram disulfides.

It will be clear that the invention allows for the use of only one second sulfur cure accelerator and for the use of more than one second cure accelerator. If more than one second sulfur cure accelerator is used, it can be a combination of two or more dithiocarbamates, a combination of two or more thiurams, or a combination of at least one dithiocarbamate and at least one thiuram.

Examples of suitable dithiocarbamares are bismuth dimethyldithiocarbamate, cadmium diethyldithiocarbamate, cadmium diamyldithiocarbamate, copper dimethyldithiocarbamate, lead diamyldithiocarbamate, lead dimethyldithiocarbamate, selenium diethyldithiocarbamate, selenium dimethyldithiocarbamate, tellurium diethyldithiocarbamate, piperidinium pentamethylene dithiocarbamate, zinc diamyldithiocarbamate, zinc diisobutyldithiocarbamate, zinc diethyldithiocarbamate, zinc dimethyldithiocarbamate, copper dibutyldithiocarbamate, sodium dimethyldithiocarbamate, sodium diethyldithiocarbamate, sodium dibutyldithiocarbamate, zinc di-n-butyldithiocarbamate, and zinc dibenzyldithiocarbamate. Examples of thiuram monosulfides are tetramethylthiuram monosulfide, isobutylthiuram monosulfide, dibenzylthiuram monosulfide, tetrabenzylthiuram monosulfide, and tetra-isobutylthiuram monosulfide
Examples of thiuram disulfides are tetrabutylthiuram disulfide, tetramethylthiuram disulfide, tetraethylthiuram disulfide, isobutylthiuram disulfide, dibenzylthiuram disulfide, tetrabenzylthiuram disulfide, and tetra-isobutylthiuram disulfide,. Examples of thiuram tetra- and hexasulfides are dipentamethylenethiuram tetrasulfide and dipentamethylenethiuram hexasulfide, respectively.
The most preferred second sulfur cure accelerators are tetrabenzylthiuram disulfide (TBzTD) and zinc dibenzyldithiocarbamate (ZBEC). Tetrabenzylthiuram disulfide does not liberate unsafe nitrosamines upon use.

The second sulfur cure accelerator is preferably used in the process of the present invention in an amount of 0.1-5 phr, more preferably 0.3-4 phr, and most preferably 0.5-3 phr.

Other conventional rubber additives may also be present in the process of the present invention, such as carbon black, silica, clay, chalk, talc, aluminium hydroxide, magnesium hydroxide, and calcium carbonate, lubricants, tackifiers, waxes, antioxidants, pigments, UV-stabilization agents, antiozonants, blowing agents, nucleating agents, extender oils, e.g. paraffinic oils, voltage stabilizers, water tree retardants, metal deactivators, coupling agents, dyes, and colorants. If used, such additives are to be used in an amount sufficient to give the intended effect.

Co-agents, in particular silicone elastomers, poly-maleimides (including bis- and tris-maleimides) and poly-citraconimides (including bis- and tris-citraconimides) do not need to be added in the process of the present invention and are therefore preferably absent from the process of the invention.

The process according to the invention can be performed by thoroughly mixing all components, preferably at temperatures at which the half-life of the initiator is more than 0.5 hour, preferably more than 1 hour, even more preferably more than 2 hours. In practice, the temperature is about 50 to 150°C during the mixing phase. The mixing can be achieved in various ways, as is known to the skilled person. For instance, the components may be mixed on a variety of apparatuses including multi-roll mills, screw mills, continuous mixers, compounding extruders, and Banbury mixers, or dissolved in mutual or compatible solvents. The process is preferably performed by first making a blend of the elastomer and any optionally added additives that will not react with the elastomer, for instance in a Banbury mixer or a continuous extruder. This blend is then further mixed on a heated mill, for instance a two-roll mill, where the sulfur, sulfur cure accelerators, and the peroxide are added, and the milling is continued until an intimate mixture of all the components is obtained. The rolls are preferably kept at a temperature in the range of about 80 to 120°C. The composition is removed from the mill in the form of a sheet and then brought to a form suitable for subsequent processing.
After mixing, the composition is cross-linked at a preferred temperature of from 80°C, more preferably 120°C, most preferably 140°C, up to 300°C, more preferably up to 200°C in a period of 2 minutes up to 2 hours. The most preferred crosslinking temperatures are in the range of 150-200°C.

The resulting crosslinked EPM or EPDM can have various applications including door seals, window seals, roofing membranes, tread, undertread, sidewall, wire skim, inner liner, bead compound, hoses, belts, tubes, engine mounts, shock absorbers, isolators, weather stripping, moulding, vehicle bumpers, and semiconductor and insulating parts in wires and cables.

### EXAMPLES

### Example 1

A design of experiment was performed using Design-Expert® software.
In this design of experiments, two sulfur cure accelerators were used: the first accelerator being n-cyclohexyl-2-benzothiazole sulfenamide (CBS); the second accelerator being tetrabenzyl thiuram disulfide (TBzTD).
Perkadox® BC-40MB (a formulation of 40 wt% dicumyl peroxide on an elastomeric carrier) was used as the peroxide.
In the formulation shown in Table 1, the amounts of peroxide and accelerator were varied in order to obtain an optimized recipe satisfying the following criteria:

| | |
|---|---|
| Rheometer cure time (t90) | < 10 min |
| Tensile Strength | 12.7-13 MPa |
| Crescent (Tear Strength) | > 52 kN/m |
| Compression set at 70°C < 14 % | |
| Compression set at 100°C < 31 % | |
| Compression set at 120°C < 37 % | |
| Perkadox BC-40MB amount | < 3 phr |

**Table 1**

| **Ingredients** | **Amount (grams)** |
|---|---|
| Dutral® 4038 (EPDM with an ethylene content of 73%) | 100 |
| Carbon Black N772 | 70 |
| Carbon Black N550 | 70 |
| Texpar® 100 oil | 50 |
| Zinc oxide | 3 |
| Stearic acid | 1 |
| Sulfur | 0.4 |
| CBS | 0.5 - 3 |
| TBzTD | 0.5 - 3 |
| Px BC-40MB | 1 - 6 |

The performance of the optimized recipe ("Hybrid cure system" of Table 2) was then compared with a peroxide cure recipe and a sulfur cure recipe leading to a similar crosslink density and similar ultimate tensile strength properties. The results are displayed in Table 2.

The rheometer data, recorded at 160°C, were measured according to ISO 6502-1991 (Measurement of vulcanization characteristics with rotorless curemeters). The parameters indicated in the table are: ts2 (scorch time), t5 (time to 5% of maximum torque), t50 (time to 50% of maximum torque), t90 (time to 90% of maximum torque), ML (Minimum torque level), MH (maximum torque level), and delta S (MH-ML).

The mechanical properties were evaluated according to the following ISO standards: ISO 37:1995 Tensile stress-strain properties (tensile strength and elongation at break) ISO 34: 1975, Tear strength (crescent).
ISO 815-1991 (Compression set).

The tensile, tear, and compression set properties were determined on fully cured rubber compounds using a compression moulding curing technique: process temperatures were 160°C and the time of cure was 1.5 x t90. For tensile and tear testing, sheets were produced with a thickness of 2 mm. For compression set experiments, small cylindrical test pieces were produced with a diameter of 13.0 ± 0.5 mm and a thickness of 6.3 ± 0.3 mm. The table shows different compression set experiments performed at different temperatures: 70°C, 100°C, and 120°C; all for the same test time: 24 hours.

The mechanical properties were measured both before and after ageing at 200°C for 2 hours of the already fully cured elastomers.

**Table 2**

| | Hybrid cure system | Peroxide cure system | Sulfur cure system |
|---|---|---|---|
| Dutral 4038 | 100 | 100 | 100 |
| CB N772 | 70 | 70 | 70 |
| CB N550 | 70 | 70 | 70 |
| Texpar 100 | 50 | 50 | 50 |
| Zinc oxide | 3 | 3 | 3 |
| Stearic acid | 1 | 1 | 1 |
| TBzTD | 1.11 | - | 2 |
| CBS | 1.01 | - | 1.5 |
| Px BC-40MB | 2.87 | 7 | - |
| Sulfur | 0.4 | - | 0.4 |

| **Rheometer data @ 160°C** | | | |
|---|---|---|---|
| ts2 [min] | 2.7 | 1.0 | 3.3 |
| t5 [min] | 1.4 | 0.5 | 2.4 |
| t90 [min] | 9.4 | 13.7 | 7.3 |
| ML [Nm] | 0.23 | 0.24 | 0.25 |
| MH [Nm] | 1.46 | 1.44 | 1.55 |
| delta S [Nm] | 1.23 | 1.20 | 1.30 |

| **Mechanical properties** | | | |
|---|---|---|---|
| Tensile Strength [MPa] | 12.9 | 12.7 | 12.4 |
| Elongation [%] | 499 | 324 | 560 |
| Crescent [kN/m] | 57 | 33 | 57 |
| CS 70°C 24h [%] | 13 | 17 | 14 |
| CS 100°C 24h [%] | 15 | 17 | 31 |
| CS 120°C 24h [%] | 32 | 17 | 37 |

| **Mechanical properties after ageing at 200°C for 2 h** | | | |
|---|---|---|---|
| Tensile Strength [MPa] | 13.6 | 10.5 | 12.8 |
| Elongation [%] | 267 | 336 | 243 |
| Crescent [kN/m] | 34 | 34 | 38 |
| CS 70°C 24h [%] | 24 | 27 | 28 |
| CS 100°C 24h [%] | 25 | 25 | 30 |
| CS 120°C 24h [%] | 26 | 24 | 32 |

As shown in Table 2, the hybrid cure system according to the present invention requires less sulfur cure accelerators than a sulfur cure system to obtain similar crosslink density and tensile strength. This is an advantage in terms of costs and health and safety. Furthermore, the compression set properties of the hybrid cure system according to the present invention, both before and after ageing, outperform the sulfur cure system.

Compared to the peroxide cure system, the hybrid cure system according to the present invention is faster curing (when considering t90), with a longer scorch time ts2. This longer scorch time is advantageous during processing in for example extrusion or injection mounding equipment. The biggest advantage of the hybrid cure system is the huge improvement in tear strength (measured as Crescent tear) when compared to the peroxide cure system. The tear strength of elastomers is not only an important mechanical property for end products (e.g. for roofing sheets) but also important during processing; e.g. during de-moulding of crosslinked articles. As a result of the improved tear strength, less mould-fouling is expected.

### Example 2

Table 3 shows the effect of the presence or absence of the accelerators and the peroxide on the mechanical properties of the cured system.

**Table 3**

| | **Hybrid cure system** | **No peroxide** | **No CBS** | **No TBzTD** |
|---|---|---|---|---|
| TBzTD | 1.11 | 1.11 | 1.11 | - |
| CBS | 1.01 | 1.01 | - | 1.01 |
| Px BC-40MB | 2.87 | - | 2.87 | 2.87 |
| Sulfur | 0.40 | 0.40 | 0.40 | 0.40 |
| | | | | |

| **Rheometer data @ 160°C** | | | | |
|---|---|---|---|---|
| ts2 [min] | 2.7 | 3.4 | 2.1 | 3.4 |
| t5 [min] | 1.4 | 2.5 | 1.4 | 1.1 |
| t90 [min] | 9.4 | 7.7 | 13.0 | 14.4 |
| ML [Nm] | 0.23 | 0.26 | 0.20 | 0.25 |
| MH [Nm] | 1.46 | 1.41 | 1.39 | 1.38 |
| delta S [Nm] | 1.23 | 1.15 | 1.19 | 1.13 |

| **Mechanical properties:** | | | | |
|---|---|---|---|---|
| Tensile Strength [MPa] | 12.9 | 11.8 | 13.0 | 12.1 |
| Elongation [%] | 499 | 578 | 500 | 541 |
| Crescent [kN/m] | 57 | 55 | 56 | 56 |
| CS 70°C 24h [%] | 13 | 16 | 17 | 17 |
| CS 100°C 24h [%] | 15 | 26 | 23 | 24 |
| CS 120°C 24h [%] | 32 | 46 | 41 | 43 |

| **Mechanical properties after ageing at 200°C for 2 h** | | | | |
|---|---|---|---|---|
| Tensile Strength [MPa] | 13.6 | 12.2 | 11.8 | 13.2 |
| Elongation [%] | 267 | 248 | 240 | 278 |
| Crescent [kN/m] | 34 | 30 | 29 | 34 |
| CS 70°C 24h [%] | 24 | 32 | 33 | 25 |
| CS 100°C 24h [%] | 25 | 33 | 37 | 24 |
| CS 120°C 24h [%] | 26 | 34 | 36 | 24 |

These data show that the absence of peroxide leads to a lower crosslink density, resulting in a lower rheometer torque, lower tensile strength, and higher compression set properties. Absence of CBS leads to high compression set properties after ageing. Absence of TBzTD leads to a lower crosslink density and a long cure time (longer than the desired 10 minutes), resulting in a lower rheometer torque, lower tensile strength, and higher compression set properties at higher temperatures.

Table 3 therefore clearly shows that all individual components, including two sulfur cure accelerators, are required to reach the most optimal properties.

### Example 3

Table 4 shows the effect of the process of the present invention on the resistance to oxygen inhibition.

The sensitivity towards oxygen was tested using the following method: the ingredients were mixed on a two-roll-mill using a thin 0.2 mm nip, resulting in +/-0.4 mm thick samples. These samples were cured for 10 minutes in a hot-air-circulated oven at 200°C. The tensile strength of the resulting thin films depends on the sensitivity of the cure system towards oxygen inhibition, because this prevents crosslinking of the surface layer up to a depth of several hundreds of micrometers. As shown in Table 4, sulfur cured systems and hybrid cured systems according to the present invention do not show this oxygen inhibition effect, whereas the peroxide cured system showed a significant decrease in tensile strength due to oxygen inhibition.

**Table 4**

| **EPDM cure system** | | | | | |
|---|---|---|---|---|---|
| Sulfur | 0.40 | 0.40 | 0.40 | 0.40 | - |
| TBzTD | 1.00 | 1.00 | 1.00 | 2.00 | - |
| CBS | 1.00 | 1.00 | 1.00 | 2.00 | - |
| Px BC-40MB | 3.00 | 4.00 | 5.00 | - | 7.00 |

| **Mechanical properties** | | | | | |
|---|---|---|---|---|---|
| Tensile Strength [MPa] | 12.6 | 13.0 | 13.6 | 12.2 | 13.4 |
| Elongation [%] | 490 | 468 | 443 | 565 | 317 |
| Crescent [kN/m] | 54 | 57 | 55 | 52 | 33 |
| CS 70°C 24h [%] | 12 | 12 | 12 | 12 | 17 |
| CS 100°C 24h [%] | 16 | 14 | 15 | 25 | 17 |
| CS 120°C 24h [%] | 31 | 29 | 24 | 42 | 18 |
| CS 150°C 70h [%] | 72 | 68 | 69 | 76 | 36 |

| **Tensile properties after oxygen exposure / hot air oven cure** | | | | | |
|---|---|---|---|---|---|
| Ox. Inhib. TS | 13.0 | 13.0 | 12.9 | 12.8 | 9.3 |
| Ox. Inhib. EL | 337 | 322 | 340 | 312 | 333 |

### Example 4

The hybrid cure system of Example 2 was repeated with different first and second sulfur cure accelerators, with additional co-agents, and with accelerators other than those according to claim 1. Table 5 lists the results.
Experiments 1-5 are in accordance with the invention and use a first and a second sulfur cure accelerator according to the invention. As the first accelerator, n-cyclohexyl-2-benzothiazole sulfenamide (CBS) and N-t-butyl-2-benzothiazolesulfenamide (TBBS) were used. As the second accelerator, tetrabenzyl thiuram disulfide (TBzTD) and tetramethyl thiuram disulfide (TMTD) were used. Experiments 1-3 show that the use of these combinations leads to high crosslink densities (high delta S), good, i.e. low, compression set (CS) values (particularly at high temperatures), and high Crescent tear strengths.

The use of 2-mercaptobenzothiazole (MBT) instead of either the first or the second sulfur cure accelerator according to the present invention leads to undercure of the system; as observed by the lower delta torque levels in experiments A and B. Additionally, experiment A shows a detrimental effect on the tear strength and an increased onset of cure (i.e. scorch), whereas experiment B shows a poorer compression set at high temperatures.

Experiments 4 and 5 shows the effect of using co-agents additional to the first and second sulfur cure accelerator according to the invention. The presence of N,N'-m-phenylene bismaleimide (HVA-2) leads to increased crosslink densities but at the expense of a lower tear strength and no significant improvement in compression set. Addition of a polybutadiene based coagent (Pertac™ GR-60) gives no real advantage compared to its absence. In other words: in the process according to the present invention, there is no need for the addition of co-agents. Experiments C and D use dipentamethylenethiuram tetrasulfide (DPTT) instead of a second accelerator according to the present invention. This leads to a poor tear strength and poor compression set at 120°C. The additional presence of the co-agent HVA-2 does not lead to improved mechanical properties. The HVA-2 co-agent increases the crosslink density but does not lead to improved tear strength or compression set. Further, its addition leads to a too fast onset of cure (scorch) but not to a lower cure time (t90).

Experiment F shows what happens if caprolactam disulfide (CLD-80) is used instead of a second sulfur cure accelerator according to the present invention: The use of CLD results in an undercured system, as is evident from the low delta S and poor compression set values at high temperature.

**Table 5**

| | 1 | 2 | 3 | 4 | 5 | A | B | C | D | F |
|---|---|---|---|---|---|---|---|---|---|---|
| Px BC-40MB | 2.87 | 2.87 | 2.87 | 2.87 | 2.87 | 2.87 | 2.87 | 2.87 | 2.87 | 2.87 |
| Sulfur | 0.40 | 0.40 | 0.40 | 0.40 | 0.40 | 0.40 | 0.40 | 0.40 | 0.40 | 0.40 |

| *1^{st} accelerator:* | | | | | | | | | | |
|---|---|---|---|---|---|---|---|---|---|---|
| CBS | 1.01 | 1.01 | | 1.01 | 1.01 | | 1.01 | 1.01 | 1.01 | 1.01 |
| TBBS | | | 0.91 | | | | | | | |

| *2^{nd} accelerator:* | | | | | | | | | | |
|---|---|---|---|---|---|---|---|---|---|---|
| TBzTD | 1.11 | | 1.11 | 1.11 | 1.11 | 1.11 | | | | |
| TMTD-70 | | 0.7 | | | | | | | | |

| *Other accelerators*/*co-agents:* | | | | | | | | | | |
|---|---|---|---|---|---|---|---|---|---|---|
| MBT | | | | | | 1.01 | 1.11 | | | |
| DPTT | | | | | | | | 1.11 | 1.11 | |
| CLD-80 | | | | | | | | | | 0.75 |
| HVA-2 | | | | 2 | | | | | 2 | |
| Pertac GR-60 | | | | | 3.3 | | | | | |

| **Rheometer data @ 160°C** | | | | | | | | | | |
|---|---|---|---|---|---|---|---|---|---|---|
| ts2 [min] | 2.7 | 2.5 | 3.2 | 2.7 | 3.1 | 1.6 | 2.3 | 2.1 | 1.9 | 2.7 |
| t5 [min] | 1.4 | 1.7 | 1.7 | 2.0 | 1.9 | 1.0 | 1.4 | 1.4 | 1.5 | 1.3 |
| t90 [min] | 9.4 | 8.6 | 11.3 | 13.4 | 9.4 | 10.2 | 11.7 | 9.1 | 10.8 | 9.7 |
| ML [Nm] | 0.23 | 0.24 | 0.23 | 0.24 | 0.24 | 0.24 | 0.24 | 0.23 | 0.25 | 0.24 |
| MH [Nm] | 1.46 | 1.51 | 1.53 | 2.23 | 1.43 | 1.34 | 1.38 | 1.75 | 2.47 | 1.35 |
| delta S [Nm] | 1.23 | 1.28 | 1.30 | 1.99 | 1.19 | 1.10 | 1.14 | 1.52 | 2.22 | 1.11 |

| **Mechanical properties** | | | | | | | | | | |
|---|---|---|---|---|---|---|---|---|---|---|
| Tensile Strength [MPa] | 12.9 | 13.0 | 13.6 | 14.9 | 12.1 | 13.1 | 12.4 | 14.8 | 15.6 | 12.5 |
| Elongation [%] | 499 | 486 | 487 | 354 | 503 | 497 | 533 | 391 | 356 | 530 |
| Crescent [kN/m] | 57 | 55 | 53 | 45 | 52 | 47 | 57 | 45 | 44 | 53 |
| CS 70°C 24h [%] | 13 | 13 | 12 | 13 | 15 | 12 | 15 | 9 | 11 | 16 |
| CS 100°C 24h [%] | 15 | 16 | 13 | 14 | 18 | 14 | 17 | 16 | 15 | 20 |
| CS 120°C 24h [%] | 32 | 30 | 27 | 25 | 31 | 31 | 37 | 37 | 36 | 43 |

## Claims

1. Process for crosslinking an elastomer selected from EPM and EPDM comprising the step of combining said elastomer with the following ingredients:
- elemental sulfur
- a peroxide
- a first sulfur cure accelerator being a benzothiazole sulfenamide
- a second sulfur cure accelerator selected from the group consisting of dithiocarbamates and thiurams.

2. Process according to claim 1 wherein the elastomer is EPDM.

3. Process according to claim 1 or 2 wherein the first sulfur cure accelerator is n-cyclohexyl-2-benzothiazole sulfenamide (CBS).

4. Process according to any one of the preceding claims wherein the second sulfur cure accelerator is a dithiocarbamate.

5. Process according to claim 4 wherein the dithiocarbamate is zinc dibenzyldithiocarbamate (ZBEC).

6. Process according to claim 1, 2, or 3 wherein the second sulfur cure accelerator is a thiuram polysulfide.

7. Process according to claim 6 wherein the second sulfur cure accelerator is a thiuram disulfide.

8. Process according to claim 7 wherein the thiuram disulfide is tetrabenzyl thiuram disulfide (TBzTD).

9. Process according to any one of the preceding claims wherein the peroxide is selected from the group consisting of dicumyl peroxide, trimeric cyclic methyl ethyl ketone peroxide, 2,5-dimethyl-2,5-di(tert-butylperoxy)hexane, and di(t-butylperoxyisopropyl)benzene.

## Patentansprüche

1. Verfahren zur Vernetzung eines Elastomers ausgewählt aus EPM und EPDM, mit dem Schritt des Kombinierens des Elastomers mit den folgenden Bestandteilen:
- elementarem Schwefel
- einem Peroxid
- einem ersten Schwefelhärtungsbeschleuniger, der aus einem Benzothiazol-Sulfenamid besteht
- einem zweiten Schwefelhärtungsbeschleuniger ausgewählt aus der Gruppe bestehend aus Dithiocarbamaten und Thiuramen.

2. Verfahren nach Anspruch 1, wobei das Elastomer aus EPDM besteht.

3. Verfahren nach Anspruch 1 oder 2, wobei der erste Schwefelhärtungsbeschleuniger aus n-Cyclohexyl-2-Benzothiazol-Sulfenamid (CBS) besteht.

4. Verfahren nach einem der vorhergehenden Ansprüche, wobei der zweite Schwefelhärtungsbeschleuniger aus einem Dithiocarbamat besteht.

5. Verfahren nach Anspruch 4, wobei das Dithiocarbamat aus Zink-Dibenzyldithiocarbamat (ZBEC) besteht.

6. Verfahren nach Anspruch 1, 2 oder 3, wobei der zweite Schwefelhärtungsbeschleuniger aus einem Thiurampolysulfid besteht.

7. Verfahren nach Anspruch 6, wobei der zweite Schwefelhärtungsbeschleuniger aus einem Thiuramdisulfid besteht.

8. Verfahren nach Anspruch 7, wobei das Thiuramdisulfid aus Tetrabenzyl-Thiuramdisulfid (TBzTD) besteht.

9. Verfahren nach einem der vorhergehenden Ansprüche, wobei das Peroxid aus der Gruppe bestehend aus Dicumylperoxid, trimerem, cyclischem Methylethylketonperoxid, 2,5-Dimethyl-2,5-di(tert-Butylperoxy)hexan und di(t-Butylperoxyisopropyl)benzol ausgewählt ist.

## Revendications

1. Procédé de réticulation d'un élastomère choisi parmi EPM et EPDM, comprenant l'étape consistant à combiner ledit élastomère avec les ingrédients suivants :
- du soufre élémentaire
- un peroxyde
- un premier accélérateur de vulcanisation au soufre qui est un benzothiazole sulfénamide
- un deuxième accélérateur de vulcanisation au soufre choisi dans le groupe constitué de dithiocarbamates et de thiurames.

2. Procédé selon la revendication 1, dans lequel l'élastomère est l'EPDM.

3. Procédé selon la revendication 1 ou 2, dans lequel le premier accélérateur de vulcanisation au soufre est le n-cyclohexyl-2-benzothiazole sulfénamide (CBS).

4. Procédé selon l'une quelconque des revendications précédentes, dans lequel le deuxième accélérateur de vulcanisation au soufre est un dithiocarbamate.

5. Procédé selon la revendication 4, dans lequel le dithiocarbamate est le dibenzyldithiocarbamate de zinc (ZBEC).

6. Procédé selon la revendication 1, 2 ou 3, dans lequel le deuxième accélérateur de vulcanisation au soufre est un polysulfure de thiurame.

7. Procédé selon la revendication 6, dans lequel le deuxième accélérateur de vulcanisation au soufre est un disulfure de thiurame.

8. Procédé selon la revendication 7, dans lequel le disulfure de thiurame est le disulfure de tétrabenzylthiurame (TBzTD).

9. Procédé selon l'une quelconque des revendications précédentes, dans lequel le peroxyde est choisi dans le groupe constitué de peroxyde de dicumyle, de peroxyde de méthyléthylcétone cyclique trimère, de 2,5-diméthyl-2,5-di(tert-butylperoxy)hexane et de di(t-butylperoxyisopropyl)benzène.
